# EUROPEAN PATENT SPECIFICATION

(11) **EP 4 113 509 B1**
(45) Date of publication and mention of the grant of the patent: **28.01.2026**
(21) Application number: 21182638.3
(22) Date of filing: 30.06.2021
(51) Int. Cl.: G10L 15/26, G10L 13/06, G10L 13/00, G10L 13/027

(54) **VOICE COMMUNICATION BETWEEN A SPEAKER AND A RECIPIENT OVER A COMMUNICATION NETWORK**
SPRACHKOMMUNIKATION ZWISCHEN EINEM SPRECHER UND EINEM EMPFÄNGER ÜBER EIN KOMMUNIKATIONSNETZWERK
COMMUNICATION VOCALE ENTRE UN ORATEUR ET UN DESTINATAIRE SUR UN RÉSEAU DE COMMUNICATION

(43) Date of publication of application: 04.01.2023
(73) Proprietor: Elektrobit Automotive GmbH, 91058 Erlangen (DE)
(72) Inventor: Strassenburg-Kleciak, Marek, 60488 Frankfurt am Main (DE); Kurumbudel, Prashanth Ram, 60488 Frankfurt am Main (DE)
(74) Representative: Aumovio Corporation

(56) References cited:
- EP-A1- 2 224 426
- US-A1- 2021 183 392

## Description

The present invention is related to a method, a computer program, and a system for voice communication between a speaker and a recipient over a communication network. The invention is further related to apparatuses for use such a system and a vehicle comprising such apparatuses.

Document US 2021 /1833 92 A1 refers to a natural language processing method and apparatus. A natural language processing method according to that document includes extracting a phoneme string from a text corpus labeled with recognition information including at least one of one named entity (NE) or speech intention, generating a phoneme-based training data set by labeling the recognition information in the extracted phoneme string, and generating an artificial neural network-based learning model (LM) using the generated training data set. The natural language processing method therein may be associated with an artificial intelligence module, a drone (Unmanned Aerial Vehicle, UAV), a robot, an AR (Augmented Reality) device, a VR (Virtual Reality) device, a device associated with 5G services, etc..

Document EP 2 224 426 A1 refers to a method of associating a voice font with a contact for text-to-speech conversion at an electronic device including obtaining, at the electronic device, the voice font for the contact, and storing the voice font in association with a contact data record stored in a contacts database at the electronic device. The contact data record includes contact data for the contact. With the broad availability of broadband Internet access, voice communication has shifted to IP telephony solutions, also known as Voice over Internet Protocol (VoIP). VoIP refers to technologies for the delivery of voice communications over Internet Protocol (IP) networks. While these technologies in general deliver a satisfactory service, sometimes people are difficult to understand during a voice call. A main reason is a low bandwidth or data rate of the connection. If the achievable data rate is too low, the connection is still available, but the quality of conversation is unsatisfactory.

It is an object of the present invention to provide a solution for voice communication between a speaker and a recipient over a communication network, which delivers an improved quality of communication.

This object is achieved by a method according to claim 1, by a computer program according to claim 10, which implements this method, by a system according to claim 11, and by an apparatus according to claim 12.

The dependent claims include advantageous further developments and improvements of the present principles as described below. The invention is defined by the appended claims. The aim of the specification is to aid the understanding of the claims.

According to a first aspect, a method for voice communication between a speaker and a recipient over a communication network comprises the steps of:
- receiving an input speech utterance from the speaker;
- converting the input speech utterance to text;
- transmitting at least the text over the communication network;
- converting the transmitted text into an output speech utterance that simulates a voice of the speaker; and
- providing the output speech utterance to the recipient.

Accordingly, a computer program comprises instructions, which, when executed by at least one processor, cause the at least one processor to perform the following steps for voice communication between a speaker and a recipient over a communication network:
- receiving an input speech utterance from the speaker;
- converting the input speech utterance to text;
- transmitting at least the text over the communication network;
- converting the transmitted text into an output speech utterance that simulates a voice of the speaker; and
- providing the output speech utterance to the recipient.

The term computer has to be understood broadly. In particular, it also includes workstations, distributed systems, and other processor-based or microcontroller-based data processing devices.

The computer program can, for example, be made available for electronic retrieval or stored on a computer-readable storage medium. Amongst others, the computer program can be provided as an app for mobile devices.

According to another aspect, a system for voice communication between a speaker and a recipient over a communication network comprises:
- an input module configured to receive an input speech utterance from the speaker;
- a speech-to-text conversion module configured to convert the input speech utterance to text;
- a transmission module configured to transmit at least the text over the communication network;
- a text-to-speech conversion module configured to convert the transmitted text into an output speech utterance that simulates a voice of the speaker; and
- an output module configured to provide the output speech utterance to the recipient.

According to another aspect, an apparatus for use in a system according to the invention comprises:
- an input module configured to receive an input speech utterance from the speaker;
- a speech-to-text conversion module configured to convert the input speech utterance to text; and
- a transmission module configured to transmit at least the text over the communication network.

According to another aspect, an apparatus for use in a system according to the invention comprises:
- a receiving module configured to receive text generated from an input speech utterance of a speaker;
- a text-to-speech conversion module configured to convert the transmitted text into an output speech utterance that simulates a voice of the speaker; and
- an output module configured to provide the output speech utterance to the recipient.

According to the invention, the speech input of a speaker is converted into text by a speech-to-text conversion module and transmitted as text to the recipient, preferably together with additional information about the speech utterance. This additional information may include, for example, an intonation (e.g., ascending or descending), a speed of speech, detected emotions (e.g., exited, nervous, etc.), durations of the individual words, etc. At the side of the recipient, the received text and, if applicable, the additional information are then converted into a speech output by a text-to-speech conversion module. Speech-to-text and text-to-speech conversion modules are state of the art. This conversion of the received text is done in such way that the speech output resembles the voice of the speaker. Even though the voice of the speaker is synthesized, the recipient will have the feeling of listening to the speaker's voice. As the transmission of text has less requirements with regard to the connection to the communication network than the transmission of voice, a seamless voice call experience is achieved even in fluctuating network conditions. As a further advantage, the described solution allows removing noise stemming from the side of the speaker.

In an advantageous embodiment, a bandwidth of a connection to the communication network is evaluated at the side of the speaker. In this way, the conversion of the speech input of the speaker into text can be omitted if the connection to the communication network is good enough for transmitting voice.

In an advantageous embodiment, in case of a sufficiently large bandwidth, the input speech utterance is transmitted as voice and as text. In this way, depending on the data connection at the side of the recipient, the received text can be discarded or used for generating the speech output.

In an advantageous embodiment, the transmitted text is converted into an output speech utterance by a text-to-speech algorithm. Text-to-speech algorithms are well established and have rather limited requirements with regard to the necessary processing power. Preferably, the text-to-speech algorithm uses a phoneme library suitable for simulating different speakers. In this way, by an appropriate choice of the phonemes the voice of the speaker can easily be simulated.

In an advantageous embodiment, the transmitted text is converted into an output speech utterance by one or more trained artificial intelligence models. While trained artificial intelligence models typically require more processing power than text-to-speech algorithms, they will yield more natural speech outputs.

In an advantageous embodiment, a first trained artificial intelligence model transforms the transmitted text into an intermediate speech utterance and a second trained artificial intelligence model transforms the intermediate speech utterance into the output speech utterance. In this way, the first trained artificial intelligence model converts the input data into another space and is broadly usable irrespective of a specific speaker. The second artificial intelligence model manipulates the data in the same space. Preferably, the second artificial intelligence model is trained with the voice of the individual specific speaker. In addition to the first artificial intelligence model and the second artificial intelligence model, a further artificial intelligence model may be provided, which is responsible for synthesizing the tone or emotion of the speaker. This further artificial intelligence model may make use of the additional information that is sent along with the text.

In an advantageous embodiment, the second trained artificial intelligence model is selected from a bank of trained artificial intelligence models. The artificial intelligence models inside the bank are individual models trained with individual user voices. This allows simulating the voices of different speakers.

In an advantageous embodiment, the second trained artificial intelligence model is selected from the bank of trained artificial intelligence models based on information about the speaker. In this way, an artificial intelligence model that is appropriate for simulating the voice of a specific speaker can easily be determined.

In an advantageous embodiment, the information about the speaker is provided by the speaker or determined by a voice analysis algorithm. The information provided by the speaker may, for example, be a unique identifier, which is associated with an artificial intelligence model of the bank. Alternatively, the voice analysis algorithm may provide characteristics of the voice of the speaker. These characteristics may then be used for determining an artificial intelligence model in the bank that generates similar characteristics.

Preferably, a vehicle comprises apparatuses for use in a system according to the invention. In this way, an improved quality of voice communication is achieved even in situations or locations with low connectivity. However, the described solutions are applicable to any VoIP system.

Further features of the present invention will become apparent from the following description and the appended claims in conjunction with the figures.

### Figures

- Fig. 1: schematically illustrates a method for voice communication between a speaker and a recipient over a communication network;
- Fig. 2: schematically illustrates a system for voice communication between a speaker and a recipient over a communication network;
- Fig. 3: schematically illustrates a first embodiment of an apparatus for use in the system of Fig. 2 at the side of the speaker;
- Fig. 4: schematically illustrates a second embodiment of an apparatus for use in the system of Fig. 2 at the side of the speaker;
- Fig. 5: schematically illustrates a first embodiment of an apparatus for use in the system of Fig. 2 at the side of the recipient;
- Fig. 6: schematically illustrates a second embodiment of an apparatus for use in the system of Fig. 2 at the side of the recipient;
- Fig. 7: depicts a system diagram of a first embodiment of a solution according to the invention;
- Fig. 8: depicts a system diagram of a second embodiment of a solution according to the invention;
- Fig. 9: shows details of a conversion from text to speech with trained artificial intelligence models; and
- Fig. 10: schematically illustrates a motor vehicle in which a solution according to the invention is implemented.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

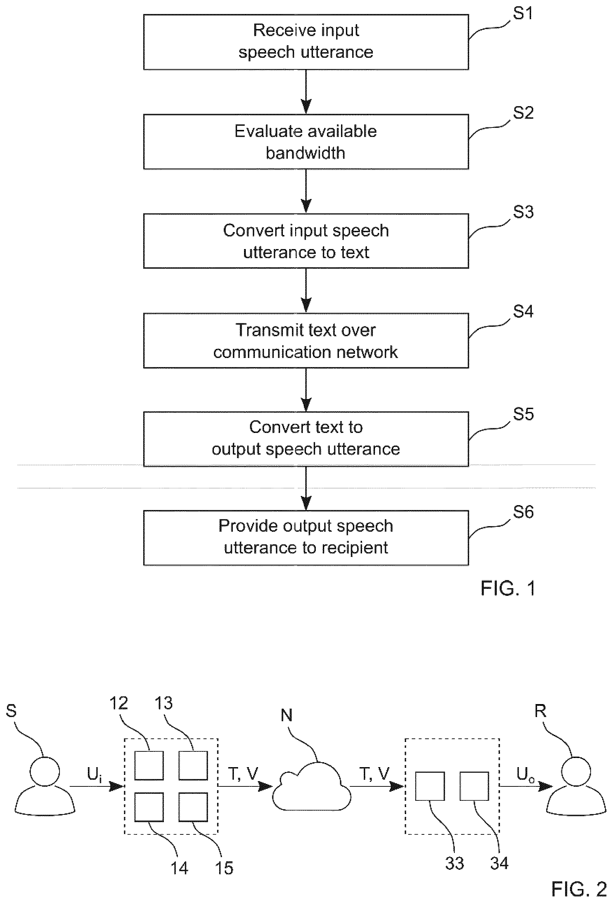

Fig. 1 schematically illustrates a method according to the invention for voice communication between a speaker and a recipient over a communication network. In a first step, an input speech utterance is received S1 from the speaker. Optionally, a bandwidth of a connection to the communication network is evaluated S2 at the side of the speaker. The input speech utterance is then converted S3 to text. At least the text is transmitted S4 over the communication network. In case of a sufficiently large bandwidth, the input speech utterance may be transmitted S4 as voice and as text. The transmitted text is converted S5 into an output speech utterance that simulates a voice of the speaker. For this purpose, a text-to-speech algorithm may be used. Preferably, such a text-to-speech algorithm uses a phoneme library suitable for simulating different speakers. Alternatively, the transmitted text is converted S5 into an output speech utterance by one or more trained artificial intelligence models. For example, a first trained artificial intelligence model may transform the transmitted text into an intermediate speech utterance. A second trained artificial intelligence model the transforms the intermediate speech utterance into the output speech utterance. The second trained artificial intelligence model may be selected from a bank of trained artificial intelligence models, e.g. based on information about the speaker. Such information may be provided by the speaker or determined by a voice analysis algorithm. Finally, the output speech utterance is provided S6 to the recipient.

Fig. 2 schematically illustrates a block diagram of a system for voice communication between a speaker S and a recipient R over a communication network N. The system comprises an input module 12 configured to receive an input speech utterance Ui from the speaker S. An evaluation module 13 may be provided at the side of the speaker for evaluating a bandwidth of a connection to the communication network N. A speech-to-text conversion module 14 is configured to convert the input speech utterance Ui to text T. A transmission module 15 is configured to transmit at least the text T over the communication network N, preferably together with additional information about the speech utterance. In case of a sufficiently large bandwidth, the input speech utterance Ui may be transmitted by the transmission module 15 as voice V and as text T. A text-to-speech conversion module 33 is configured to convert the transmitted text T into an output speech utterance Uₒ that simulates a voice of the speaker S. For this purpose, the text-to-speech conversion module 33 may use a text-to-speech algorithm. Preferably, such a text-to-speech algorithm uses a phoneme library suitable for simulating different speakers. Alternatively, the text-to-speech conversion module 33 may convert the transmitted text into the output speech utterance Uₒ using one or more trained artificial intelligence models. For example, a first trained artificial intelligence model may transform the transmitted text into an intermediate speech utterance. A second trained artificial intelligence model the transforms the intermediate speech utterance into the output speech utterance. The second trained artificial intelligence model may be selected from a bank of trained artificial intelligence models, e.g. based on information about the speaker S. Such information may be provided by the speaker S or determined by a voice analysis algorithm. An output module 34 is configured to provide the output speech utterance Uₒ to the recipient R.

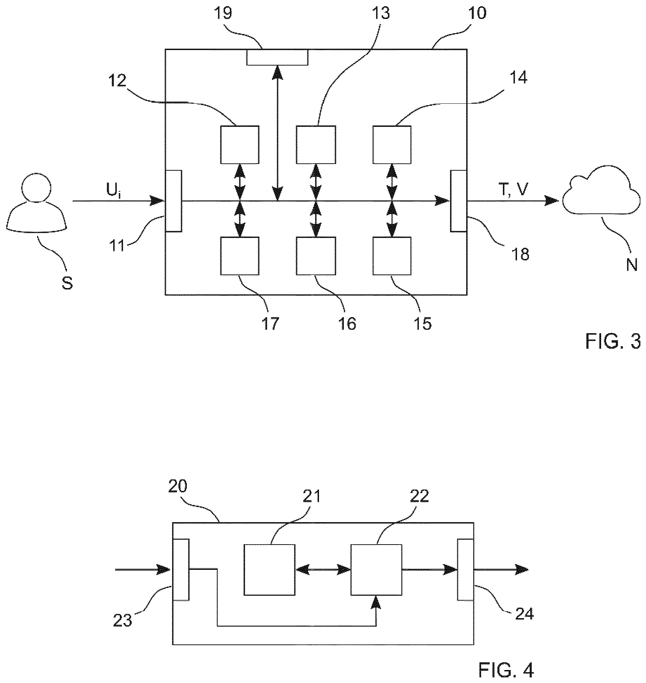

Fig. 3 schematically illustrates a block diagram of a first embodiment of an apparatus 10 for use in the system of Fig. 2 at the side of the speaker S. The apparatus 10 has an input 11 via which an input module 12 receives an input speech utterance Ui from the speaker S. An evaluation module 13 may be provided for evaluating a bandwidth of a connection to a communication network N. The apparatus 10 further has a speech-to-text conversion module 14 configured to convert the input speech utterance Ui to text T. A transmission module 15 is configured to transmit at least the text T over the communication network N via an output 18, preferably together with additional information about the speech utterance, such as an intonation, a speed of speech, detected emotions, durations of the individual words, etc. In case of a sufficiently large bandwidth, the input speech utterance Ui may be transmitted by the transmission module 15 as voice V and as text T. A local storage unit 17 is provided, e.g. for storing data during processing. The output 18 may also be combined with the input 11 into a single bidirectional interface.

The various modules 12-15 may be controlled by a control module 16. A user interface 19 may be provided for enabling a user to modify settings of the various modules 12-16. The modules 12-16 of the apparatus 10 can be embodied as dedicated hardware units. Of course, they may likewise be fully or partially combined into a single unit or implemented as software running on a processor, e.g. a CPU or a GPU.

A block diagram of a second embodiment of an apparatus 20 according to the invention for use in the system of Fig. 2 at the side of the speaker is illustrated in Fig. 4. The apparatus 20 comprises a processing device 22 and a memory device 21. For example, the apparatus 20 may be a computer, an embedded system, or part of a distributed system. The memory device 21 has stored instructions that, when executed by the processing device 22, cause the apparatus 20 to perform steps according to one of the described methods. The instructions stored in the memory device 21 thus tangibly embody a program of instructions executable by the processing device 22 to perform program steps as described herein according to the present principles. The apparatus 20 has an input 23 for receiving data. Data generated by the processing device 22 are made available via an output 24. In addition, such data may be stored in the memory device 21. The input 23 and the output 24 may be combined into a single bidirectional interface.

The processing device 22 as used herein may include one or more processing units, such as microprocessors, digital signal processors, or a combination thereof.

The local storage unit 17 and the memory device 21 may include volatile and/or non-volatile memory regions and storage devices such as hard disk drives, optical drives, and/or solid-state memories.

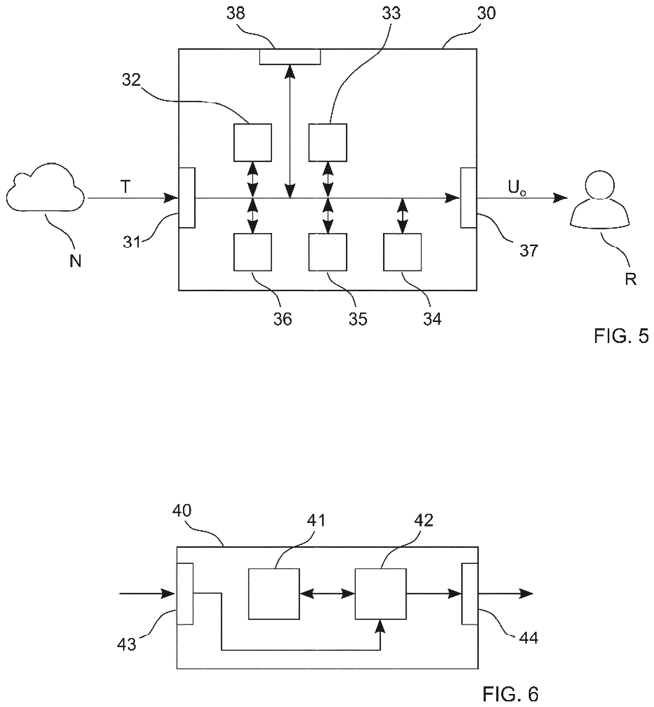

Fig. 5 schematically illustrates a block diagram of a first embodiment of an apparatus 30 for use in the system of Fig. 2 at the side of the recipient R. The apparatus 30 has an input 31 via which a receiving module 32 receives text T generated from an input speech utterance of a speaker. A text-to-speech conversion module 33 is configured to convert the transmitted text T into an output speech utterance Uₒ that simulates a voice of the speaker. For this purpose, the text-to-speech conversion module 33 may use a text-to-speech algorithm. Preferably, such a text-to-speech algorithm uses a phoneme library suitable for simulating different speakers. Alternatively, the text-to-speech conversion module 33 may convert the transmitted text into an output speech utterance using one or more trained artificial intelligence models. For example, a first trained artificial intelligence model may transform the transmitted text into an intermediate speech utterance. A second trained artificial intelligence model the transforms the intermediate speech utterance into the output speech utterance. The second trained artificial intelligence model may be selected from a bank of trained artificial intelligence models, e.g. based on information about the speaker. Such information may be provided by the speaker or determined by a voice analysis algorithm. An output module 34 is configured to provide the output speech utterance Uₒ to the recipient R via an output 37. A local storage unit 36 is provided, e.g. for storing data during processing. The output 37 may also be combined with the input 31 into a single bidirectional interface.

The various modules 32-34 may be controlled by a control module 35. A user interface 38 may be provided for enabling a user to modify settings of the various modules 32-35. The modules 32-35 of the apparatus 30 can be embodied as dedicated hardware units. Of course, they may likewise be fully or partially combined into a single unit or implemented as software running on a processor, e.g. a CPU or a GPU.

A block diagram of a second embodiment of an apparatus 40 according to the invention for use in the system of Fig. 2 at the side of the recipient is illustrated in Fig. 6. The apparatus 40 comprises a processing device 42 and a memory device 41. For example, the apparatus 40 may be a computer, an embedded system, or part of a distributed system. The memory device 41 has stored instructions that, when executed by the processing device 42, cause the apparatus 40 to perform steps according to one of the described methods. The instructions stored in the memory device 41 thus tangibly embody a program of instructions executable by the processing device 42 to perform program steps as described herein according to the present principles. The apparatus 40 has an input 43 for receiving data. Data generated by the processing device 42 are made available via an output 44. In addition, such data may be stored in the memory device 41. The input 43 and the output 44 may be combined into a single bidirectional interface.

The processing device 42 as used herein may include one or more processing units, such as microprocessors, digital signal processors, or a combination thereof.

The local storage unit 36 and the memory device 41 may include volatile and/or non-volatile memory regions and storage devices such as hard disk drives, optical drives, and/or solid-state memories.

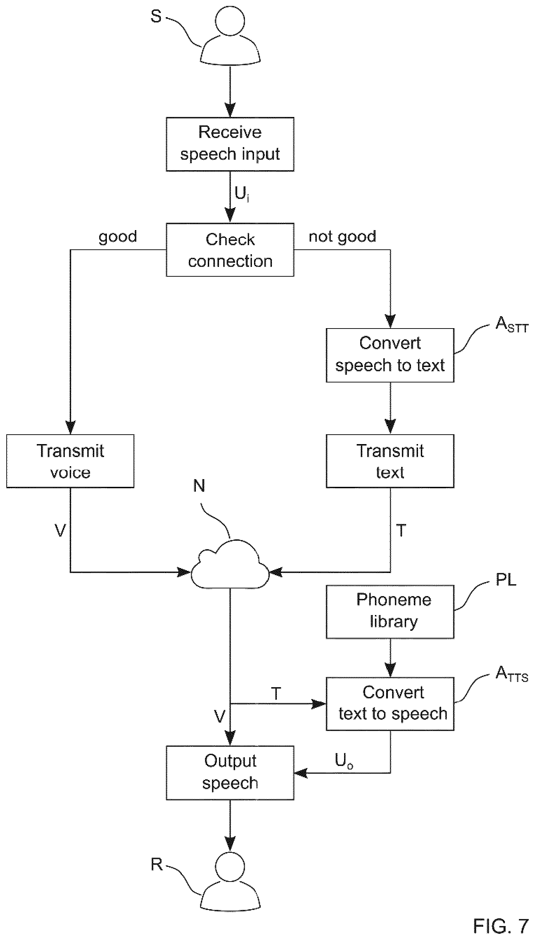

Fig. 7 depicts a system diagram of a first embodiment of a solution according to the invention. When the speaker S speaks, i.e. when an input speech utterance Ui of the speaker S is received, a data connection of a VoIP device at the side of the speaker S is checked. In particular, the bandwidth or available data rate may be determined. If the connection is not good enough for transporting voice signals, the input speech utterance Ui of the speaker S is converted to text T using a speech-to-text algorithm A_{STT}. The text T is transmitted over the communication network N. The received text T is then converted to voice with the help of a text-to-speech algorithm A_{TTS}. The resulting output speech utterance Uₒ is provided to the recipient R. For closely resembling the voice of the Speaker S, the text-to-speech algorithm A_{TTS} makes use of a large phoneme library PL. As a result, even in case of a bad connection the recipient R will hear an output speech utterance Uₒ that at least closely resembles the voice of the speaker S. The phoneme library PL may be located in the hardware used by the recipient R or in a cloud solution.

If the connection at the side of the speaker S is good enough for voice transmission, the voice V is transmitted over the communication network N as VoIP. In this case, the input speech utterance Ui may optionally still be converted to text T and transmitted in addition to the voice V. Depending on the data connection at the side of the recipient R, the system can make use of the received text T or discard it.

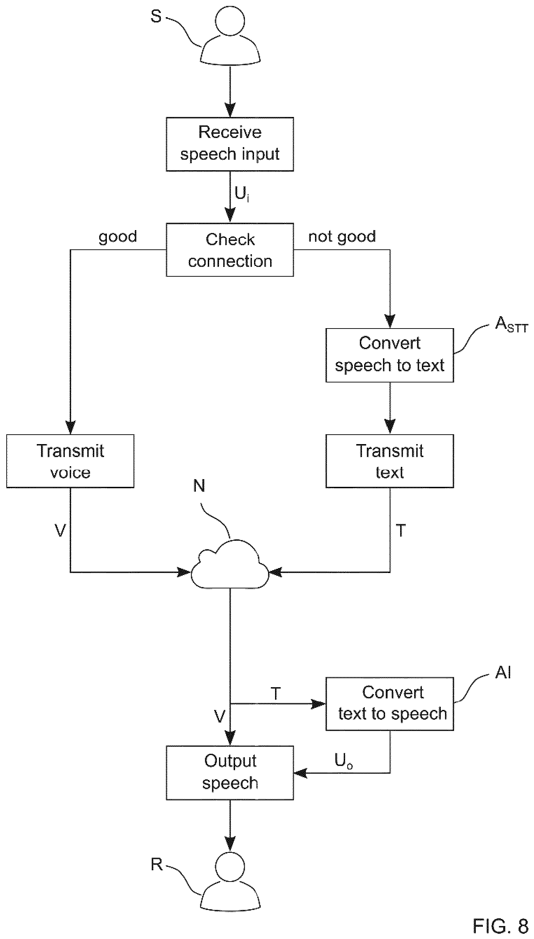

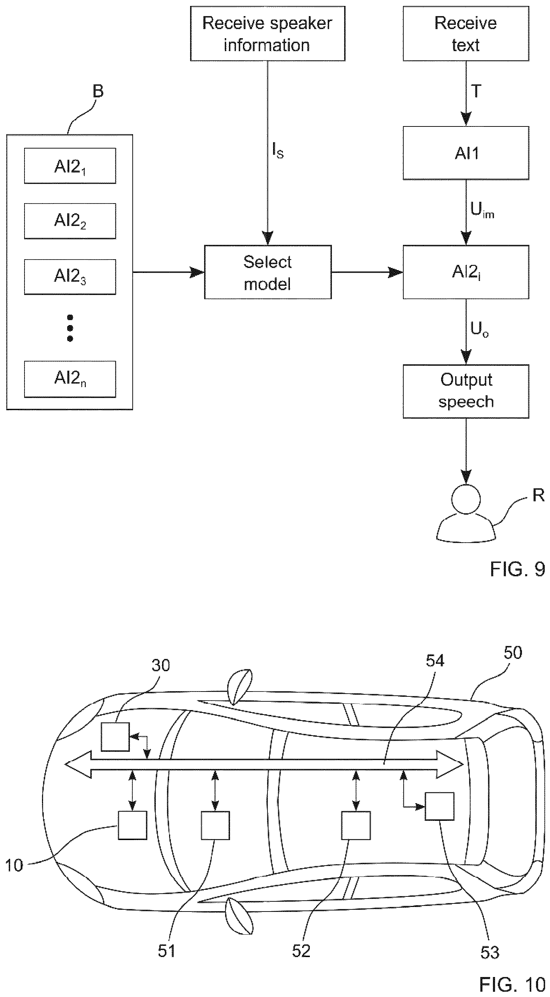

Fig. 8 depicts a system diagram of a second embodiment of a solution according to the invention. The solution is largely identical to the solution of Fig. 1. However, in this case, the conversion of the text to T into an output speech utterance Uₒ is made using one or more trained artificial intelligence models AI. Details of the conversion from text T to speech are shown in Fig. 9. The arrangement of the artificial intelligence models AI1, AI2i in the figure constitutes a multimodal network. For any conversion from text to speech, processing is done by two artificial intelligence models. A first artificial intelligence model AI1 converts the text T into an intermediate speech utterance Uᵢₘ in a digital format. The intermediate speech utterance Uᵢₘ is then provided to a second artificial intelligence model AI2i, which is selected from a bank B of trained artificial intelligence models AI2ᵢ. The artificial intelligence models AI2i inside the bank B are individual models AI2i trained with individual user voices. For the selection of a suitable artificial intelligence model AI2i, information I_{S} about the speaker is used. This information Is may, for example, be provided by the speaker or determined automatically using a voice analysis algorithm. The selected artificial intelligence model AI2i manipulates the intermediate speech utterance Uᵢₘ created by the first artificial intelligence model AI1 into another format is such way that the resulting output speech utterance Uₒ closely resembles the voice of the speaker. In other words, the first artificial intelligence model AI1 converts the input data into another space, whereas the second artificial intelligence model AI2i manipulates the data in the same space. In addition to the first artificial intelligence model AI1 and the second artificial intelligence model AI2i, a further artificial intelligence model (not shown) may be provided, which is responsible for synthesizing the tone or emotion of the speaker. This further artificial intelligence model may make use of tags that are sent along with the text. In this case, the speech-to-text algorithm on the sending side advantageously provides additional information about the speech utterance, such as an intonation, a speed of speech, detected emotions, durations of the individual words, etc.

Fig. 10 schematically shows a motor vehicle 50, in which a solution in accordance with the invention is implemented. The motor vehicle 50 has an infotainment system 51, which is able to establish a VoIP voice communication via a communication network. For this purpose, a data transmission unit 52 is provided. The motor vehicle 50 further has apparatuses 10, 30 according to the invention, which are used for an improved voice communication. The apparatuses 10, 30 may be provided as dedicated hardware units or included in the infotainment system 51. A memory 53 is available for storing data. The data exchange between the different components of the motor vehicle 50 takes place via a network 54.

## Claims

1. A method for voice communication between a speaker (S) and a recipient (R) over a communication network (N), the method comprising:
- receiving (S1) an input speech utterance (Ui) from the speaker (S);
- evaluating (S2) a bandwidth or data rate of a connection to the communication network (N) at the side of the speaker (S) [description, p. 13, par. 4; Figs. 7 & 8]
- converting (S3) the input speech utterance (Ui) to text (T) , if the connection is not good enough for transporting voice signals [description, p. 13, par. 4; Fig. 7 & 8];
- transmitting (S4) at least the text (T) over the communication network (N);
- converting (S5) the transmitted text (T) into an output speech utterance (Uₒ) that simulates a voice of the speaker (S); and
- providing (S6) the output speech utterance (Uₒ) to the recipient (R).

2. The method according to claim 1, wherein in case of a sufficiently large bandwidth, the input speech utterance (Ui) is transmitted as voice (V) and as text (T).

3. The method according to one of claims 1 or 2, wherein the transmitted text (T) is converted (S5) into the output speech utterance (Uₒ) by a text-to-speech algorithm (A_{TTS}).

4. The method according to claim 3, wherein the text-to-speech algorithm (A_{TTS}) uses a phoneme library (PL) suitable for simulating different speakers (S).

5. The method according to one of claims 1 or 2, wherein the transmitted text is converted (S5) into the output speech utterance (Uₒ) by one or more trained artificial intelligence models (AI1, AI2ᵢ).

6. The method according to claim 5, wherein a first trained artificial intelligence model (AI1) transforms the transmitted text (T) into an intermediate speech utterance (Uᵢₘ) and a second trained artificial intelligence model (AI2ᵢ) transforms the intermediate speech utterance (Uᵢₘ) into the output speech utterance (Uₒ).

7. The method according to claim 6, wherein the second trained artificial intelligence model (AI2ᵢ) is selected from a bank (B) of trained artificial intelligence models (AI2ᵢ).

8. The method according to claim 7, wherein the second trained artificial intelligence model (AI2ᵢ) is selected from the bank (B) of trained artificial intelligence models (AI2ᵢ) based on information (I_{S}) about the speaker (S).

9. The method according to claim 8, wherein the information (I_{S}) about the speaker (S) is provided by the speaker (S) or determined by a voice analysis algorithm.

10. A computer program comprising instructions, which, when executed by at least one processor, cause the at least one processor to perform a method according to any of claims 1 to 9 for voice communication between a speaker (S) and a recipient (R) over a communication network (N).

11. A system for voice communication between a speaker (S) and a recipient (R) over a communication network (N), the system comprising:
- an input module (12) configured to receive (S1) an input speech utterance (Ui) from the speaker (S);
- an evaluation module (13) configured to evaluate a bandwidth or data rate of a connection to the communication network (N) [description, p. 9, par. 3; p. 10, par. 2; Figs. 2 & 3];
- a speech-to-text conversion module (14) configured to convert (S3) the input speech utterance (Ui) to text (T), if the connection is not good enough for transporting voice signals [description, p. 13, par. 4; Fig. 7 & 8];
- a transmission module (15) configured to transmit (S4) at least the text (T) over the communication network (N);
- a text-to-speech conversion module (33) configured to convert (S5) the transmitted text (T) into an output speech utterance (Uₒ) that simulates a voice of the speaker (S); and
- an output module (34) configured to provide (S6) the output speech utterance (Uₒ) to the recipient (R).

12. An apparatus (10) for use in a system according to claim 11, the apparatus (10) comprising:
- an input module (12) configured to receive (S1) an input speech utterance (Ui) from the speaker (S);
- an evaluation module (13) configured to evaluate a bandwidth or data rate of a connection to the communication network (N) [description, p. 9, par. 3; p. 10, par. 2; Figs. 2 & 3];
- a speech-to-text conversion module (14) configured to convert (S3) the input speech utterance (Ui) to text (T) , if the connection is not good enough for transporting voice signals [description, p. 13, par. 4; Fig. 7 & 8]; and
- a transmission module (15) configured to transmit (S4) at least the text (T) over the communication network (N).

13. A vehicle (50), **characterized in that** the vehicle (50) comprises an apparatus (20, 30) according to claim 12 for voice communication between a speaker (S) and a recipient (R) over a communication network (N).

## Patentansprüche

1. Verfahren zur Sprachkommunikation zwischen einem Sprecher (S) und einem Empfänger (R) über ein Kommunikationsnetz (N), wobei das Verfahren umfasst:
- Empfangen (S1) einer Eingabe-Sprachäußerung (Ui) von dem Sprecher (S);
- Bewerten (S2) einer Bandbreite oder Datenrate einer Verbindung zu dem Kommunikationsnetz (N) auf der Seite des Sprechers (S) [Beschreibung, S. 13, Par. 4; Figs. 7 & 8]
- Umwandeln (S3) der Eingabe-Sprachäußerung (Uᵢ) in Text (T), wenn die Verbindung nicht gut genug zum Transportieren von Sprachsignalen ist [Beschreibung, S. 13, Par. 4; Fig. 7 & 8];
- Übertragen (S4) zumindest des Textes (T) über das Kommunikationsnetz (N);
- Umwandeln (S5) des übertragenen Textes (T) in eine Ausgabe-Sprachäußerung (Uₒ), die eine Stimme des Sprechers (S) simuliert; und
- Bereitstellen (S6) der Ausgabe-Sprachäußerung (Uₒ) für den Empfänger (R).

2. Verfahren nach Anspruch 1, wobei im Falle einer ausreichend großen Bandbreite die Eingabe-Sprachäußerung (Uᵢ) als Stimme (V) und als Text (T) übertragen wird.

3. Verfahren nach einem der Ansprüche 1 oder 2, wobei der übertragene Text (T) durch einen Text-zu-Sprache-Algorithmus (A_{TTS}) in die Ausgabe-Sprachäußerung (Uₒ) umgewandelt wird (S5).

4. Verfahren nach Anspruch 3, wobei der Text-zu-Sprache-Algorithmus (A_{TTS}) eine Phonembibliothek (phoneme library, PL) verwendet, die zum Simulieren verschiedener Sprecher (S) geeignet ist.

5. Verfahren nach einem der Ansprüche 1 oder 2, wobei der übertragene Text durch ein oder mehrere trainierte Modelle künstlicher Intelligenz (Al1, AI2ᵢ) in die Ausgabe-Sprachäußerung (Uₒ) umgewandelt wird (S5).

6. Verfahren nach Anspruch 5, wobei ein erstes trainiertes Modell künstlicher Intelligenz (AI1) den übertragenen Text (T) in eine Zwischen-Sprachäußerung (Uᵢₘ) transformiert und ein zweites trainiertes Modell künstlicher Intelligenz (AI2ᵢ) die Zwischen-Sprachäußerung (Uᵢₘ) in die Ausgabe-Sprachäußerung (Uₒ) transformiert.

7. Verfahren nach Anspruch 6, wobei das zweite trainierte Modell künstlicher Intelligenz (AI2ᵢ) aus einer Bank (B) von trainierten Modellen künstlicher Intelligenz (AI2ᵢ) ausgewählt wird.

8. Verfahren nach Anspruch 7, wobei das zweite trainierte Modell künstlicher Intelligenz (AI2ᵢ) aus der Bank (B) von trainierten Modellen künstlicher Intelligenz (AI2ᵢ) basierend auf Informationen (I_{S}) über den Sprecher (S) ausgewählt wird.

9. Verfahren nach Anspruch 8, wobei die Informationen (Is) über den Sprecher (S) von dem Sprecher (S) bereitgestellt oder durch einen Sprachanalyse-Algorithmus bestimmt werden.

10. Computerprogramm, umfassend Anweisungen, die, wenn sie von mindestens einem Prozessor ausgeführt werden, den mindestens einen Prozessor veranlassen, ein Verfahren nach einem der Ansprüche 1 bis 9 zur Sprachkommunikation zwischen einem Sprecher (S) und einem Empfänger (R) über ein Kommunikationsnetz (N) durchzuführen.

11. System zur Sprachkommunikation zwischen einem Sprecher (S) und einem Empfänger (R) über ein Kommunikationsnetz (N), wobei das System umfasst:
- ein Eingabemodul (12), das zum Empfangen (S1) einer Eingabe-Sprachäußerung (Ui) von dem Sprecher (S) ausgelegt ist;
- ein Bewertungsmodul (13), das zum Bewerten einer Bandbreite oder Datenrate einer Verbindung zu dem Kommunikationsnetz (N) ausgelegt ist [Beschreibung, S. 9, Par. 3; S. 10, Par. 2; Figs. 2 & 3];
- ein Sprache-zu-Text-Umwandlungsmodul (14), das zum Umwandeln (S3) der Eingabe-Sprachäußerung (Uᵢ) in Text (T) ausgelegt ist, wenn die Verbindung nicht gut genug zum Transportieren von Sprachsignalen ist [Beschreibung, S. 13, Par. 4; Fig. 7 & 8];
- ein Übertragungsmodul (15), das zum Übertragen (S4) zumindest des Textes (T) über das Kommunikationsnetz (N) ausgelegt ist;
- ein Text-zu-Sprache-Umwandlungsmodul (33), das zum Umwandeln (S5) des übertragenen Textes (T) in eine Ausgabe-Sprachäußerung (Uₒ) ausgelegt ist, die eine Stimme des Sprechers (S) simuliert; und
- ein Ausgabemodul (34), das zum Bereitstellen (S6) der Ausgabe-Sprachäußerung (Uₒ) für den Empfänger (R) ausgelegt ist.

12. Vorrichtung (10) zur Verwendung in einem System nach Anspruch 11, wobei die Vorrichtung (10) umfasst:
- ein Eingabemodul (12), das zum Empfangen (S1) einer Eingabe-Sprachäußerung (Ui) von dem Sprecher (S) ausgelegt ist;
- ein Bewertungsmodul (13), das zum Bewerten einer Bandbreite oder Datenrate einer Verbindung zu dem Kommunikationsnetz (N) ausgelegt ist [Beschreibung, S. 9, Par. 3; S. 10, Par. 2; Figs. 2 & 3];
- ein Sprache-zu-Text-Umwandlungsmodul (14), das zum Umwandeln (S3) der Eingabe-Sprachäußerung (Uᵢ) in Text (T) ausgelegt ist, wenn die Verbindung nicht gut genug zum Transportieren von Sprachsignalen ist [Beschreibung, S. 13, Par. 4; Fig. 7 & 8]; und
- ein Übertragungsmodul (15), das zum Übertragen (S4) zumindest des Textes (T) über das Kommunikationsnetz (N) ausgelegt ist.

13. Fahrzeug (50), **dadurch gekennzeichnet, dass** das Fahrzeug (50) eine Vorrichtung (20, 30) nach Anspruch 12 zur Sprachkommunikation zwischen einem Sprecher (S) und einem Empfänger (R) über ein Kommunikationsnetz (N) umfasst.

## Revendications

1. Procédé de communication vocale entre un orateur (S) et un destinataire (R) sur un réseau de communication (N), le procédé consistant à :
- recevoir (S1) une émission de parole d'entrée (Ui) en provenance de l'orateur (S) ;
- évaluer (S2) une bande passante ou un débit de données d'une connexion au réseau de communication (N) du côté de l'orateur (S) [description, p. 13, par. 4 ; fig. 7 et 8]
- convertir (S3) l'émission de parole d'entrée (Uᵢ) en texte (T), si la connexion n'est pas suffisamment bonne pour transporter des signaux vocaux [description, p. 13, par. 4 ; fig. 7 et 8] ;
- transmettre (S4) au moins le texte (T) sur le réseau de communication (N) ;
- convertir (S5) le texte transmis (T) en une émission de parole en sortie (Uₒ) qui simule la voix de l'orateur (S) ; et
- fournir (S6) l'émission de parole en sortie (Uₒ) au destinataire (R).

2. Procédé selon la revendication 1, dans lequel, au cas où la bande passante est suffisamment large, l'émission de parole d'entrée (Uᵢ) est transmise sous forme de voix (V) et de texte (T).

3. Procédé selon l'une des revendications 1 ou 2, dans lequel le texte transmis (T) est converti (S5) en l'émission de parole en sortie (Uₒ) par un algorithme de synthèse vocale (A_{TTS}).

4. Procédé selon la revendication 3, dans lequel l'algorithme de synthèse vocale (A_{TTS}) utilise une bibliothèque de phonèmes (PL) appropriée pour simuler différents orateurs (S).

5. Procédé selon l'une des revendications 1 ou 2, dans lequel le texte transmis est converti (S5) en l'émission de parole en sortie (Uₒ) par un ou plusieurs modèles d'intelligence artificielle entraînés (AI1, AI2ᵢ).

6. Procédé selon la revendication 5, dans lequel un premier modèle d'intelligence artificielle entraîné (AI1) transforme le texte transmis (T) en une émission de parole intermédiaire (Uᵢₘ) et un second modèle d'intelligence artificielle entraîné (AI2ᵢ) transforme l'émission de parole intermédiaire (Uᵢₘ) en émission de parole en sortie (Uₒ).

7. Procédé selon la revendication 6, dans lequel le second modèle d'intelligence artificielle entraîné (AI2ᵢ) est choisi parmi une banque (B) de modèles d'intelligence artificielle entraînés (AI2ᵢ).

8. Procédé selon la revendication 7, dans lequel le second modèle d'intelligence artificielle entraîné (AI2ᵢ) est choisi parmi la banque (B) de modèles d'intelligence artificielle entraînés (AI2ᵢ) sur la base d'informations (I_{S}) concernant l'orateur (S).

9. Procédé selon la revendication 8, dans lequel les informations (I_{S}) concernant l'orateur (S) sont fournies par l'orateur (S) ou déterminées par un algorithme d'analyse vocale.

10. Programme d'ordinateur comprenant des instructions qui, lorsqu'elles sont exécutées par au moins un processeur, amènent l'au moins un processeur à mettre en œuvre un procédé selon l'une quelconque des revendications 1 à 9 pour la communication vocale entre un orateur (S) et un destinataire (R) sur un réseau de communication (N).

11. Système de communication vocale entre un orateur (S) et un destinataire (R) sur un réseau de communication (N), le système comprenant :
- un module d'entrée (12) configuré pour recevoir (S1) une émission de parole d'entrée (Ui) en provenance de l'orateur (S) ;
- un module d'évaluation (13) configuré pour évaluer une bande passante ou un débit de données d'une connexion au réseau de communication (N) [description, p. 9, par. 3 ; p. 10, par. 2 ; fig. 2 et 3] ;
- un module de conversion parole-texte (14) configuré pour convertir (S3) l'émission de parole d'entrée (Ui) en texte (T), si la connexion n'est pas suffisamment bonne pour transporter des signaux vocaux [description, p. 13, par. 4 ; fig. 7 et 8] ;
- un module de transmission (15) configuré pour transmettre (S4) au moins le texte (T) sur le réseau de communication (N) ;
- un module de conversion texte-parole (33) configuré pour convertir (S5) le texte transmis (T) en une émission de parole en sortie (Uₒ) qui simule la voix de l'orateur (S) ; et
- un module en sortie (34) configuré pour fournir (S6) l'émission de parole en sortie (Uₒ) au destinataire (R).

12. Appareil (10) destiné à être utilisé dans un système selon la revendication 11, l'appareil (10) comprenant :
- un module d'entrée (12) configuré pour recevoir (S1) une émission de parole d'entrée (Ui) en provenance de l'orateur (S) ;
- un module d'évaluation (13) configuré pour évaluer une bande passante ou un débit de données d'une connexion au réseau de communication (N) [description, p. 9, par. 3 ; p. 10, par. 2 ; fig. 2 et 3] ;
- un module de conversion parole-texte (14) configuré pour convertir (S3) l'émission de parole d'entrée (Ui) en texte (T), si la connexion n'est pas suffisamment bonne pour transporter des signaux vocaux [description, p. 13, par. 4 ; fig. 7 et 8] ; et
- un module de transmission (15) configuré pour transmettre (S4) au moins le texte (T) sur le réseau de communication (N).

13. Véhicule (50), **caractérisé en ce que** le véhicule (50) comprend un appareil (20, 30) selon la revendication 12 pour une communication vocale entre un orateur (S) et un destinataire (R) sur un réseau de communication (N).
